# EUROPEAN PATENT SPECIFICATION

(11) **EP 0 314 285 B1**
(45) Date of publication and mention of the grant of the patent: **22.09.1993**
(21) Application number: 88308578.9
(22) Date of filing: 16.09.1988
(51) Int. Cl.: F16K 7/14, B05B 1/02

(54) **A silicon valve assembly for controlling the flow of fluid**
Silikon-Ventileinrichtung zur Kontrolle des Durchflusses
Assemblage à soupape de silicone pour le contrôle de passage de liquide

(30) Priority: 19.10.1987 US 109975
(43) Date of publication of application: 03.05.1989
(73) Proprietor: FORD MOTOR COMPANY LIMITED, Brentwood Essex (GB); FORD FRANCE S. A., 92506 Rueil-Malmaison Cédex (FR); FORD-WERKE AKTIENGESELLSCHAFT, 50725 Köln (DE)
(72) Inventor: Gardner, Robert Clifford, Taylor Michigan 48180 (US); Giachino, Joseph Mario, Farmington Hills Michigan 48018 (US); Horn, William Frederick, Plymouth Michigan 48170 (US)
(74) Representative: Messulam, Alec Moses

(56) References cited:
- EP-A- 0 208 386
- US-A- 4 628 576
- US-A- 4 756 508
- US-A- 4 768 751

## Description

The invention relates to a silicon valve assembly for controlling the flow of fluid.

An article entitled "Fabrication of Novel Three-Dimensional Microstructures by the Anisotropic Etching of (100) and (110) Silicon", by E. Bassous, IEEE Transactions on Electron Devices, Vol. ED-25, No. 10, October 1978, pages 1178-85 teaches the use of anisotropic etching of single crystal silicon to make ink jet nozzles, optical waveguides, multisocket miniature electrical connectors and electromechanical devices.

U.S. Patents 4,157,935 issued to Solyst and 4,455,192 issued to Tamai teach methods of forming an ink jet nozzle array by chemical etching of a silicon wafer.

It is also known to fabricate conventional metal fluid metering valves such as those using matched fittings of very precisely machined metal components. Typical tolerances of the lapped machine parts are in the millionths of an inch. This is a complicated, labour-intensive, time-consuming manufacturing process yielding components which are expensive and subject to reliability problems as the internal tolerances change due to wear and exposure to fuel and fuel contaminants. It would be desirable to fabricate fuel injectors and other valves with substantially less labour and time using a significantly less complicated manufacturing process. That is, superior tolerances are desirable as is an insensitivity to fuel contaminants and improved reliability.

Further, it is also known to use a silicon valve for controlling the flow of fluid using first and second silicon members. The first silicon member is generally planar and has an orifice for passing the fluid. The second silicon member has a planar silicon surface aligned with, and relatively movable to, the orifice for selectively opening and closing the orifice thereby controlling flow of fluid through the orifice. Such a silicon valve and method for fabricating it are further described in U.S. Patent 4,628,576 issued December 16, 1986 and U.S. Patent No. 4,647,013 issued March 3, 1987, both assigned to the assignee hereof.

U.S. Patent No. 1,243,122 discloses a valve which is used to vaporise a gasoline and air mixture as the mixture leaves the carburettor of an engine. Figure 1 of that patent illustrates the valve comprising perforated plates 10, 12 positioned to receive the gasoline and air mixture from the carburettor 6. The plates 10, 11 are normally held against one another with the perforations in each plate offset to block any flow through the valve. When a partial vacuum is formed in manifold 5, the plate 12 moves away from the fixed plate 10 thereby vaporising the fuel mixture as seen in FIG. 3 of that patent. This reference neither teaches nor suggests the use of silicon to construct a valve.

EP-A-208386 is directed to a silicon valve for controlling the flow of fluid and includes two planar silicon members one member has an orifice for passing the fluid and the other member has a relatively movable surface to selectively open and close the orifice thereby controlling the flow of fluid through the orifice.

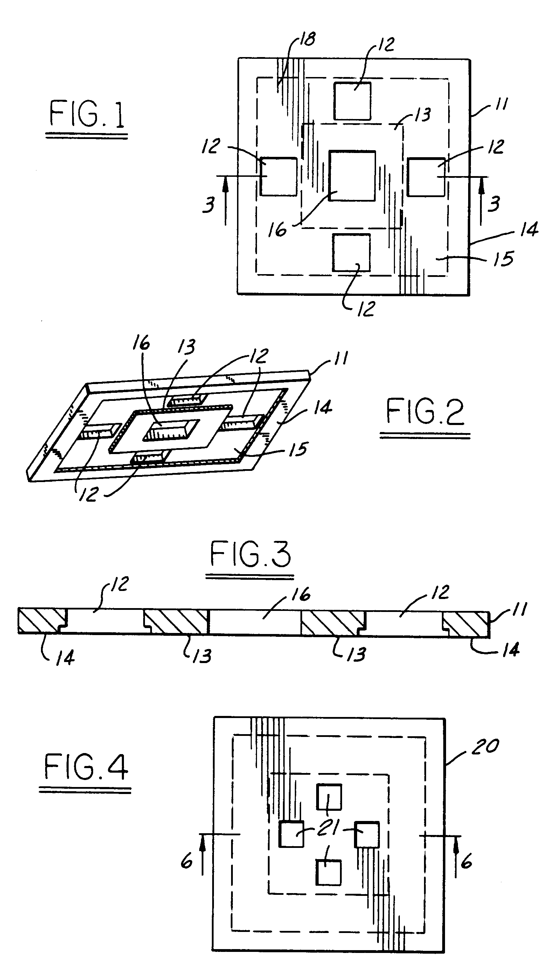

US-A-4,538,648 is directed to a valve including two valve plates sealed at their periphery walls and provided with transverse holes. US-A-4,538,642 discloses a valve which, as seen in FIG. 1, includes a valve plate or an electrically conductive sheet-like member 4 provided with an electrically insulative face surface 6 and an array of apertures 7-11. A second valve plate or electrically conductive sheet-like member 12 abuts first member 4 at face surface 6 to close off apertures 7-11. The second sheet-like member 12 has apertures 16-13 which are non-aligned with the apertures 7-11. To open the valve, switch 28 is closed, causing electric current to pass through member 4, then through conductor 26, and then rightwardly through member 12 to produce opposing electromagnetic fields to raise sheet member 4 as seen in FIG. 3. Again, there is no teaching or suggestion of using silicon to construct the valve.

The above prior art has shown that precise control of fluid flow, including gaseous, liquid or vacuum, is very difficult to achieve. The conventional approach using metal valve systems requires precise machining on very small components. Valve to valve variability is very difficult to control and the total operation is very expensive. These metal valves usually include a metal housing and pintle and are susceptible to clogging by very small foreign matter introduced through the fluids. Other approaches now in use include injection molding of a plastic valve seat against which a rubber-tipped plunger is forced to effect closure. This type of valve is subject to sticking due to environmental conditions such as very low temperature. Simpler actuation and improved flow control in silicon valves would also be desirable. These are some of the problems this invention overcomes.

According to the present invention, there is provided a silicon valve assembly for controlling the flow of a fluid including a first generally planar silicon valve member having supply openings through the plane of said first valve member for passing a fluid, a central opening for passing an actuating member and a mesa means for aligning with and closing off fluid flow through said valve assembly and a perimeter wall for sealing, and a second generally planar silicon valve member having therethrough flow nozzle shaped orifices aligned with and relatively movable with respect to said mesa means so that the flow orifices of said second valve member can be selectively opened and closed thereby controlling the flow of fluid through said flow orifices, a peripheral portion of said second valve member being sealed to the perimeter wall of said first valve member and wherein the flow orifices of said second valve member have generally rectangular cross-section and side walls which are non-parallel and angled from the perpendicular with respect to the planar surfaces of said second valve member characterised in that all the supply openings of the first valve member are provided through the plane of said first valve member, in that the whole perimeter wall of said second valve member is sealed to the perimeter wall of said first valve member, in that the flow orifices of said second valve member increase in cross-sectional size in the direction of fluid flow so that fluid flow enters said flow orifices over a sharp edge so as to define a spray pattern for the passing fluid, in that said mesa means have walls offset from the perpendicular with respect to the planar surface of the second valve member and in that the supply openings of said first valve member have side walls which are at an angle from the perpendicular with respect to the generally planar surface of said first valve member, said supply openings being sized to produce a desired predetermined pressure drop and/or flow rate.

The operation of the valve assembly depends upon the elasticity of the silicon in that the nozzle plate and the valve plate must be separated from one another to permit fluid flow.

The invention will now be described further, by way of example, with reference to the accompanying drawings, in which:
Figure 1 is a plan view of a valve plate for a valve assembly;
Figure 2 is a perspective view of the valve plate of Figure 1;
Figure 3 is a cross-section taken along line 3-3 of Figure 1;
Figure 4 is a plan view of a nozzle plate to be associated with the valve plate of Figure 1 in a valve assembly in accordance with an embodiment of this invention;
Figure 5 is a perspective view of the nozzle plate of Figure 4;
Figure 6 is a cross-section view of the nozzle plate of Figure 4 along section line 6-6;
Figure 7 is a perspective, partly broken away view of a valve assembly including the valve plate or Figure 1 and the nozzle plate of Figure 4;
Figure 8 is a section view of the valve assembly of Figure 7 with associated hardware for actuating the valve assembly including a plunger for elastically deflecting the nozzle plate;
Figure 9 is a plan view of a valve plate having individual mesas and flow openings with angled walls in accordance with an embodiment of this invention;
Figure 10 is a perspective view of the valve plate of Figure 9;
Figure 11 is a cross-section view along section line 11-11 of Figure 9;
Figure 12 is a section view along line 12-12 of Figure 9;
Figure 13 is a plan view of a nozzle plate for use in connection with the valve plate of Figure 9, in accordance with an embodiment of this invention;
Figure 14 is a perspective view of the nozzle plate of Figure 13;
Figure 15 is a section view of the nozzle plate of Figure 13 along section line 15-15;
Figure 16 is a perspective, partly broken away view of a valve assembly using the valve plate of Figure 9 and the nozzle plate of Figure 13, in accordance with an embodiment of this invention; and
Figure 17 is a cross-section view of the valve assembly of Figure 16 along section line 17-17.

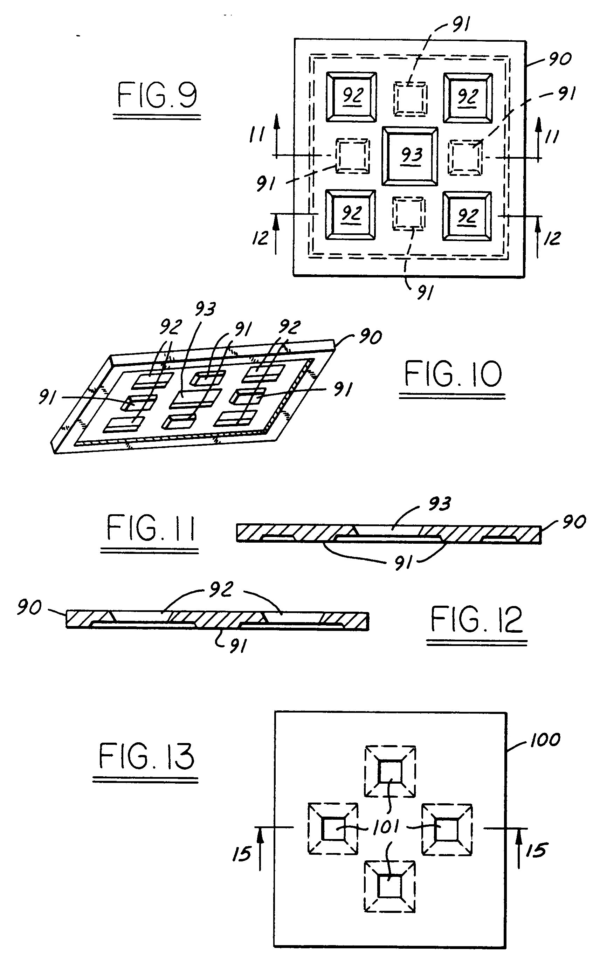

The embodiments shown in figures 1 to 8 and described herein with reference to these figures do not form a part of the present invention. The present invention covers an embodiment shown in figures 9 to 17.

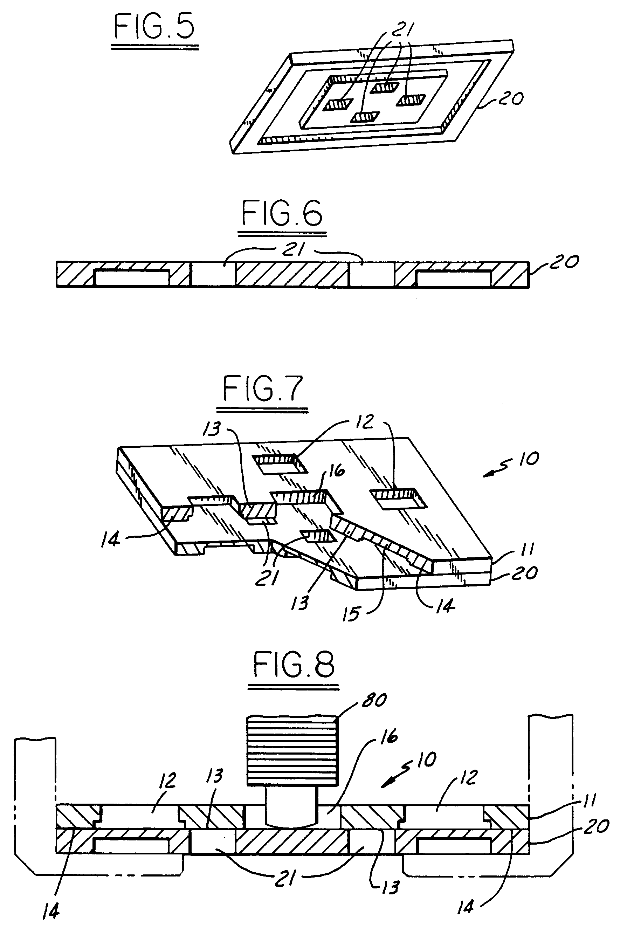

Referring to Figures 1-8, a valve assembly 10 (Figs. 7 and 8) includes a top silicon valve plate 11 and a bottom silicon nozzle plate 20. Valve plate 11 has four supply openings 12 etched through the total thickness of valve plate 11 to permit the flow of a fluid through to nozzle plate 20. The underside of valve plate 11, facing nozzle plate 20, is etched out leaving a flat area denoted a mesa 13 to close off low orifices 21 in nozzle plate 20.

Referring to Figure 4, flow orifices 21 are each generally rectangular in cross-section and are spaced about 90° apart about the centre of nozzle plate 20. Mesa 13 is a generally rectangular annular shape which is sized to fit over all of flow orifices 21. The four flow orifices 21 are etched through the thickness of nozzle plate 20 and pass fluid when valve assembly 10 is open. The flow characteristics of valve assembly 10 can range from a single stream to a fine droplet spray and are determined by the number, size, shape and distribution of the orifices in nozzle plate 20, the supply openings 12 and the pressure on the fluid. The size of supply openings 12 determines the pressure drop in the fluid across valve plate 11. Advantageously, supply openings 12 are sized so as to produce a predetermined desired pressure drop and associated flow rate. Alternatively, the flow rate can be specified. Silicon plates 11 and 20 are each formed by etching from generally planar silicon wafers advantageously having a planar optical surface.

Valve plate 11 further includes a perimeter wall 14 so that a membrane region 15 between mesa 13 and perimeter wall 14 is spaced from the facing surface of nozzle plate 20 and fluid flow can reach the sealing boundary between mesa 13 and the surface of nozzle plate 20 near flow orifices 21. Valve plate 11 further includes a central opening 16 for passing an actuator 80 (Figure 8) to contact nozzle plate 20 at a region at the center of flow orifices 21 aligned with central opening 16. Opening 16 is bounded around its periphery by mesa 13.

Silicon valve assembly 10 operates by positioning silicon valve plate 11 and silicon nozzle plate 20 adjacent each other so that mesa 13 covers flow orifices 21. Perimeter wall 14 of valve plate 11 is sealed to the periphery of nozzle plate 20 using known techniques such as reaction bonding. Extension of actuator 80 through central opening 16 of valve plate 11 reflects nozzle plate 20. Accordingly, mesa 13 is spaced from the entrance to flow orifices 21 and the fluid can flow through valve assembly 10.

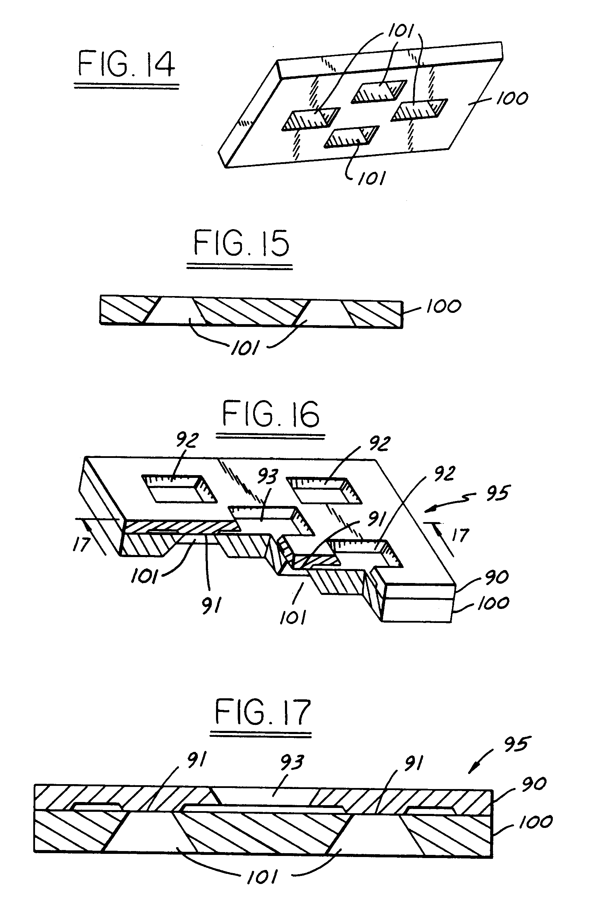

Referring to Figures 9-17, the valve assembly 95 according to the invention (Figs. 16 and 17) has a valve plate 90 shown in Figures 9-12 and a nozzle plate 100 shown in Figures 13-15. Operation of this valve assembly is similar to that shown in the valve of Figures 1-8. That is, opening of valve assembly 95 to pass fluid depends upon the elastic properties of the nozzle plate which is deflected by an actuator. Closure is achieved through the elastic properties of the silicon that restores nozzle plate 100 to its normally closed position once the opening force is removed.

However, valve assembly 95 of Figures 9-17, is different in that the size, shape and location of the orifices and mesas is different. Valve assembly 95 in Figures 9-17 is similar to valve assembly 10 in that the valve and nozzle plates are sealed together around the periphery of each of the plates. Flow orifices 101 in nozzle plate 100 are larger to increase the flow of fluid through valve assembly. Valve plate 90 has four individual sealing mesas 91 aligned with flow orifices 101. Valve plate 90 also has four supply openings 92 positioned around a central opening 93 and intermediate mesas 91. The side walls of flow orifices 101, supply orifices 91, mesas 92, and central opening 93 all are inclined by an angle from the perpendicular to the major planar plate surface determined by the crystallographic orientation of the silicon wafer and the specific micromachining technique used in fabricating the valve plate and the nozzle plate. The inclined side walls of flow orifices 101 provide an added advantage by promoting a more favorable droplet pattern as the fluid exits over the sharp edge of flow orifices 101.

Typical material and silicon orientations include 100, 110, 111; typical sizes include 3-7mm square; thicknesses include 300-500mm. The sealing of the valve plate to the nozzle plate can be accomplished by reactive bonding, anodic bonding, etc.

## Claims

1. A silicon valve assembly for controlling the flow of a fluid including a first generally planar silicon valve member (90) having supply openings (92) through the plane of said first valve member for passing a fluid, a central opening (93) for passing an actuating member (80) and a mesa means (91) for aligning with and closing off fluid flow through said valve assembly and a perimeter wall for sealing, and a second generally planar silicon valve member (100) having therethrough flow nozzle shaped orifices (101) aligned with and relatively movable with respect to said mesa means (91) so that the flow orifices (101) of said second valve member (100) can be selectively opened and closed thereby controlling the flow of fluid through said flow orifices, a peripheral portion of said second valve member being sealed to the perimeter wall of said first valve member (90) and wherein the flow orifices (101) of said second valve member (100) have generally rectangular cross-section and side walls which are non-parallel and angled from the perpendicular with respect to the planar surfaces of said second valve member (100), characterised in that all the supply openings (92) of the first valve member are provided through the plane of said first valve member (90), in that the whole perimeter wall of said second valve member (100) is sealed to the perimeter wall of said first valve member (90), in that the flow orifices (101) of said second valve member (100) increase in cross-sectional size in the direction of fluid flow so that fluid flow enters said flow orifices (101) over a sharp edge so as to define a spray pattern for the passing fluid, in that said mesa means (91) have walls offset from the perpendicular with respect to the planar surface of the second valve member (100) and in that the supply openings (92) of said first valve member have side walls which are at an angle from the perpendicular with respect to the generally planar surface of said first valve member (90), said supply openings (92) being sized to produce a desired predetermined pressure drop and/or flow rate.

2. A silicon valve assembly as claimed in Claim 1, wherein said mesa means of said first valve member (90) has a plurality of individual mesas (91), one mesa being aligned with each of said flow orifices (101) in said second valve member (100).

3. A silicon valve assembly as claimed in claim 1 or 2, wherein the sealing between said first valve member (90) and said second valve member (100) is accomplished by reaction bonding.

## Patentansprüche

1. Siliziumventileinheit zur Steuerung eines Medienflußes mit einem ersten allgemein ebenen Ventilglied (90) mit durch die Ebene des besagten ersten Ventilgliedes gehenden Zufuhröffnungen (92) für den Durchlaß eines Mediums, einer mittigen Öffnung (93) für den Durchlaß eines Betätigungsgliedes (80), und mit einem eine tafelbergartige Erhebung bildenden Mittel (91), das mit besagter Ventileinheit fluchtet und den Medienfluß durch besagte Ventileinheit blockiert, und mit einer Umfangswand zur Abdichtung, und mit einem zweiten allgemein ebenen Siliziumventilglied (100), das von spritzdüsenartigen Öffnungen (101) durchsetzt ist, die mit besagten tafelbergartigen Mitteln (91) fluchten und relativ dazu beweghar sind, so daß die Flußöffnungen (101) des besagten zweiten Ventilelements (100) selektiv geöffnet und geschlossen werden können, womit der Medienfluß durch besagte Durchflußöffnungen gesteuert wird, wobei ein Umfangsbereich des besagten zweiten Ventilgliedes mit einer Umfangswand des besagten ersten Ventilgliedes (90) dichtend verbunden ist, und worin die besagten Durchflußöffnungen (101) des besagten zweiten Ventilgliedes (100) einen allgemein rechteckigen Querschnitt aufweisen sowie Seitenwände, die nicht parallel verlaufen und mit der Senkrechten auf die Planfläche des besagten zweiten Ventilelements (100) einen Winkel bilden,
dadurch gekennzeichnet, daß alle Zufuhröffnungen (92) des ersten Ventilgliedes durch die Ebene des besagten ersten Ventilgliedes (90) hindurchgehend angeordnet sind, daß die gesamte Umfangswand des besagten zweiten Ventilgliedes (100) dicht mit der Umfangswand des besagten ersten Ventilgliedes (90) verbunden ist, daß die Durchflußöffnungen (101) des zweiten Ventilgliedes (100) in Flußrichtung des Mediums in ihrem Querschnitt zunehmen, so daß der Medienfluß über eine scharfe Kante in die Durchflußöffnungen (101) eintritt, so daß ein Sprühmuster für daß durchfließende Medium definiert wird, daß besagte tafelbergartige Erhöhungen bildende Mittel (91) gegenüber der Senkrechten auf die Planfläche des zweiten Ventilgliedes (100) versetzte Wände aufweisen, und daß die Zufuhröffnungen (92) des besagten ersten Ventilgliedes Seitenwände aufweisen, die einen Winkel mit der Senkrechten auf die allgemein ebene Fläche des besagten ersten Ventilgliedes (90) bilden, wobei besagte Zufuhröffnungen (92) so bemessen sind, daß ein gewünschtes Druckgefälle und/oder ein gewünschter Durchsatz entsteht.

2. Siliziumventileinheit nach Anspruch 1, in welcher das besagte tafelbergartige Erhebungen bildende Mittel des besagten ersten Ventilgliedes (90) eine Vielzahl von einzelnen tafelbergartigen Erhebungen (91) aufweist, wobei je eine Erhebung mit jeder der besagten Durchflußöffnungen (101) in besagtem zweitem Ventilglied (100) fluchtet.

3. Siliziumventileinheit nach Anspruch 1 oder 2, in welcher die Abdichtung zwischen besagtem erstem Ventilglied (90) und besagtem zweitem Ventilglied (100) durch Reaktionsschweißen hergestellt wird.

## Revendications

1. Ensemble de soupape en silicium destiné à commander l'écoulement d'un fluide, comprenant un premier élément (90) de soupape en silicium globalement plan pourvu d'ouvertures (92) d'alimentation traversant le plan du dit premier élément de soupape, de manière à laisser passer un fluide, une ouverture centrale (93) destinée à laisser passer un élément actionneur (80), et un moyen (91) en forme de mesa, destiné à s,aligner sur l'ensemble et à couper le flux de fluide à travers ledit ensemble de soupape, et une paroi périphérique destinée à assurer l'étanchéité, et un second élément (100) de soupape en silicium globalement plan, présentant des orifices (101) en forme de gicleurs d'écoulement traversant cet élément, des orifices étant alignés sur ledit moyen (91) en forme de mesa et pouvant être déplacée par rapport à celui-ci, de manière que les orifices (101) d'écoulement du dit second élément (100) de soupape puissent être ouverts et fermés de façon sélective, commandant, ainsi l'écoulement de fluide traversant lesdits orifices d'écoulement, une partie périphérique du dit second élément de soupape étant jointe de façon étanche à la paroi périphérique du dit premier élément (90) de soupape, et dans lequel lesdits orifices (101) d'écoulement du dit second élément (100) de soupape présentent une section transversale globalement rectangulaire et des parois latérales non parallèles, qui forment un angle avec la perpendiculaire des surfaces planes du dit second élément (100) de soupape,
caractérisé en ce que toutes les ouvertures (92) d'alimentation du premier élément de soupape sont prévues à travers le plan du dit premier élément (90) de soupape, en ce que toute la paroi périphérique du dit second élément (100) de soupape est jointe de façon étanche à la paroi périphérique du dit premier élément (90) de soupape, en ce que les orifices (101) d'écoulement du dit second élément (100) de soupape présentent une section transversale croissant dans le sens de l'écoulement du fluide, de manière que le fluide entre dans lesdits orifices (101) d'écoulement par une arête vive de manière à définir un dessin de pulvérisation pour le fluide passant, en ce que lesdits moyens (91) en forme de mesa présentent des parois décalées par rapport à la perpendiculaire à la surface plane du second membre (100) de soupape, et en ce que les ouvertures (92) d'alimentation du dit premier élément de soupape comportent des parois latérales qui forment un angle par rapport à la perpendiculaire à la surface globalement plane du dit premier élément (90) de soupape, lesdites ouvertures (92) d'alimentation étant dimensionnées de manière à produire une différence de pression et/ou un débit prédéterminés.

2. Ensemble de soupape en silicium selon la revendication 1, dans lequel ledit moyen en forme de mesa du dit premier élément (90) de soupape comporte plusieurs bossages individuels (91) en forme de mesa, un bossage en forme de mesa étant aligné sur chacun des dits orifices (101) d'écoulement ménagés dans ledit élément (100) de soupape.

3. Ensemble de soupape en silicium selon l'une des revendications 1 ou 2, dans lequel l'étanchéité entre ledit premier élément (90) de soupape et ledit seconde élément (100) de soupape est réalisée grâce à un soudage par réaction.
